# EUROPÄISCHE PATENTSCHRIFT

(11) **EP 2 170 667 B1**
(45) Veröffentlichungstag und Bekanntmachung des Hinweises auf die Patenterteilung: **25.04.2012**
(21) Anmeldenummer: 08750294.4
(22) Anmeldetag: 15.05.2008
(51) Int. Cl.: B60T 8/44

(54) **VERFAHREN ZUM BEMESSEN DES VORDRUCKS AN EINEM ANALOGISIERTEN, ELEKTROMAGNETISCH ANGESTEUERTEN HYDRAULIKVENTIL**
METHOD FOR MEASURING OUT THE ADMISSION PRESSURE IN AN INFINITELY VARIABLE, ELECTROMAGNETICALLY ACTUATED HYDRAULIC VALVE
PROCÉDÉ POUR MESURER LA PRESSION D'ALIMENTATION AU NIVEAU D'UNE SOUPAPE HYDRAULIQUE ANALOGUÉE, À COMMANDE ÉLECTROMAGNÉTIQUE

(30) Priorität: 14.07.2007 DE 102007032950
(43) Veröffentlichungstag der Anmeldung: 07.04.2010
(73) Patentinhaber: Continental Teves AG & Co. oHG, 60488 Frankfurt (DE)
(72) Erfinder: BECK, Erhard, 35781 Weilburg (DE)
(86) Internationale Anmeldenummer: PCT/EP2008/055938
(87) Internationale Veröffentlichungsnummer: WO 2009/010319

(56) Entgegenhaltungen:
- WO-A-96/28325
- WO-A-2005/012056
- WO-A-2007/025951
- DE-A1- 10 341 027

## Beschreibung

Die Erfindung betrifft ein Verfahren gemäß Oberbegriff von Anspruch 1 sowie dessen Verwendung.

Aus der DE 103 41 027 A1 ist ein Verfahren zur Längsregelung (ACC) bekannt, welches in bzw. mit einem verbreitet eingesetzten zweikreisigen ABS/ESP-Kraftfahrzeugbremsensteuergerät mit Pumpe durchführbar ist. Zur Dosierung des hydraulischen Bremsdrucks wird ein analog regelndes, elektrisch ansteuerbares hydraulisches Trennventil eingesetzt, wobei dieses im Gegensatz zu einer Regelung mit einem analog angesteuerten Einlassventil eine bremskreisübergreifende Druckregelung zulässt. Die zur Druckregelung eingesetzten Hydraulikventile sind in der Regel herkömmliche elektromagnetisch betriebene Sitzventile, welche zum Schalten konstruiert sind. Werden diese allerdings mittels eines pulsweitenmodulierten Stroms (PWM) in der Weise angesteuert, dass der Ventilstößel eine Schwimmstellung einnimmt, ist auch ein Analogregelung des Durchflusses möglich. Hierzu muss aber die Stromregelung sehr genau und reproduzierbar durchgeführt werden. Dies ist in der Regel dann ohne größere Probleme möglich, wenn der einzuregelnde Druck über einen Drucksensor in Verbindung mit einer Regelschleife eingeregelt werden kann. Erheblich schwieriger ist es, ein entsprechendes Analogregelverfahren ohne einen Drucksensor im zu regelnden Druckkreis vorzunehmen. In diesem Fall wird häufig auf gespeicherte Ventilkennlinien zurückgegriffen, welche in Verbindung mit an sich bekannten Regelverfahren eine Druckeinstellung im Rad ohne zusätzliche Raddrucksensoren erlauben. Die vorstehend erwähnte Ventilkennlinie erlaubt also eine Druckeinstellung durch das Ventil nach Maßgabe einer dem Regler als Eingangsgröße vorliegenden Druckanforderung.

Die WO 2007/025951 (P 11192) beschreibt ein Verfahren zur Bestimmung eines zwischen einem Hauptbremszylinder und einem Einlassventil eines Radbremszylinders einer Kraftfahrzeug-Bremsanlage herrschenden Vordrucks, welches den Vordruck unter Berücksichtigung des Verlaufs einer Nachlaufspannung eines getaktet betriebenen Motors einer Pumpe, welche zur Rückförderung von Bremsflüssigkeit aus einem Niederdruckspeicher in den Hauptbremszylinder verwendet wird, bestimmt. Zur Bestimmung des Vordrucks werden elektrische Kenngrößen des Spannungsverlaufs gemessen und jeweils zur Bestimmung eines Vordruckwertes herangezogen. Mit dieser Methode kann aber immer noch nicht mit ausreichender Genauigkeit der durch die Pumpe hervorgerufene Druck bestimmt werden.

Aus der WO 2005/012056 A1 (P 10991) ist ein Verfahren zur Bestimmung des Drucks eines Fluids oder des an einem elektromagnetisch ansteuerbaren Regelventil vorliegenden Differenzdrucks bekannt, bei dem zur Druckmessung das Druckregelventil herangezogen wird. Das Druckregelventil umfasst die üblichen Komponenten eines elektrohydraulischen Druckregelventils, wie Erregerspule, Ventilstößel, Ventildome etc.. Die Druckmessung erfolgt über einen elektronischen Regelkreis, der die Position des Ventilbetätigungseinrichtung oder die magnetische Kraft einregeregelt. Die zur Regelung verwendete Größe, die als Istwert herangezogen wird, repräsentiert die auf den Ventilstößel wirkende hydraulische Kraft. Die Messung dieser Kraft erfolgt durch Messung der entsprechenden magnetischen Kraft, welche sich aus der im Bereich der Erregerspule induzierten Spannung ermitteln lässt.

Die Aufgabe der vorliegenden Erfindung besteht nun darin, eine elektronische Druckregelvorrichtung mit Funktionskomponenten für einen aktiven Druckaufbau besonders ökonomisch und geräuscharm zu betreiben.

Diese Aufgabe wird erfindungsgemäß gelöst durch das Verfahren gemäß Anspruch 1.

Der Erfindung liegt der Gedanke zu Grunde, bei der analogisierten Ventilregelung einen möglichst optimalen Vordruck bei der Ventilregelung einzustellen. In der Regel ist der Vordruck um ein bestimmtes Maß höher, als der Druck an der Auslassseite des Ventils. Im beispielhaften Falle einer Regelung mit einem Trennventil wird der Vordruck auch als sogenannter Überstömdruck bezeichnet. Der Überströmdruck bezeichnet den Druck, der bei einem aktiven Druckaufbau durch ein Motorpumpenaggregat vor dem Trennventil auf der dem Pumpenausgang und den Radeinlassventilen vorgeschalteten Seite hervorgerufen wird, zum Beispiel während einer Abstandsregelung (ACC). Der Vordruck oder Überströmdruck bei einer Trennventilregelung wird also im wesentlichen durch die Drehzahl und Einschaltdauer des Pumpenmotors und der Öffnungsstellung des Trennventils bestimmt. Es wird aus Komfort-, Geräusch- und ökonomischen Gründen angestrebt, den am geregelten Ventil anliegenden Differenzdruck, insbesondere den Überströmdruck, möglichst gering zu halten. In heutigen Bremsanlagen ist dies aber auf Grund von Fertigungsstreuungen in der Kette Motor/Pumpe nicht optimal möglich, da durch die elektronische Ansteuerung immer ein ausreichender Offset für die Pumpenansteuerung vorgesehen werden muss, damit auch bei Bremsensteuergeräten mit schwächeren Motorpumpenaggregaten noch ein ausreichendes Überströmen sichergestellt ist.

Zur Bemessung des Vordrucks wird erfindungsgemäß bevorzugt ein Sollwert für den Motor des Motorpumpenaggregats vorgegeben, wobei bei der Ermittlung des Sollwerts ein elektrisches Signal aus dem Stößelstellungsregelkreis einbezogen wird.

Nach der Erfindnug wird der Vordruck durch elektronische Auswertung der Stößelreaktion eines Ventils eingestellt. Der Begriff "Stößelreaktion" soll neben dem Fall einer durch eine Druckänderung hervorgerufenen Stößelbewegung auch den Fall umfassen, bei dem lediglich die Ansteuerelektronik des entsprechenden Ventils auf eine Druckänderung am Ventil durch eine Stromänderung reagiert, ohne dass sich die Stößelposition merklich ändert. Es ist also auch möglich, dass sich dabei nur die Kräfteverhältnisse ändern, da beispielsweise auf Grund einer höheren Druckdifferenz ein größerer Ventilstrom eingestellt werden muss. Eine Auswertung der Stößelreaktion ist bevorzugt mit dem oben beschriebenen Regelkreis dann möglich, wenn sich der Stößel im oder in der Nähe eines Kräftegleichgewichts zwischen der Magnetkraft (abzüglich oder zuzüglich der Ventilfederkraft) und der hydraulischen Kraft befindet. Liegen die Kräfte weit auseinander, kann der Stößel nicht auf eine Druckänderung reagieren.

Die Stößelreaktion kann an dem Ventil, an dem der Vordruck bestimmt werden soll, oder an einem weiteren Ventil beobachtet werden. Prinzipiell kann jedes elektromagnetisch angesteuerte Hydraulikventil für diesen Zweck herangezogen werden, sofern dieses mit der Ausgangsseite des Motorpumpenaggregats über Druckleitung verbunden ist. Die Stößelreaktion, insbesondere die Stößelstellung oder die hydraulische Kraft, wird bevorzugt mittels eines elektrischen Stößelstellungsregelkreises bestimmt.

Vorzugsweise wird auf Grundlage der Stößelreaktion mittels des sogenannten TPM-Verfahrens ein Messung des Differenzdrucks am Messventil durchgeführt. Das TPM-Verfahren (Tapet Position Monitoring) ermöglicht, die Stößelstellung in einem elektromagnetisch angesteuerten Ventil oder die auf den Stößel des Ventils wirkende Kraft mittels einer Regelung einzustellen und insbesondere zu messen.

Die Erfindung betrifft auch eine elektronisch gesteuerte Kraftfahrzeugbremsdruckregelvorrichtung gemäß Anspruch 10.

Weitere bevorzugte Ausführungsformen ergeben sich aus den Unteransprüchen und der nachfolgenden Beschreibung eines Ausführungsbeispiels an Hand von Figuren.

Es zeigen
- Fig. 1: eine schematische Darstellung einer Bremsvorrichtung für ABS- und ESP-Regelvorgänge und
- Fig. 2: eine schematische Darstellung eines Regelkreises zum Regeln des Magnetflusses mit Messspule.

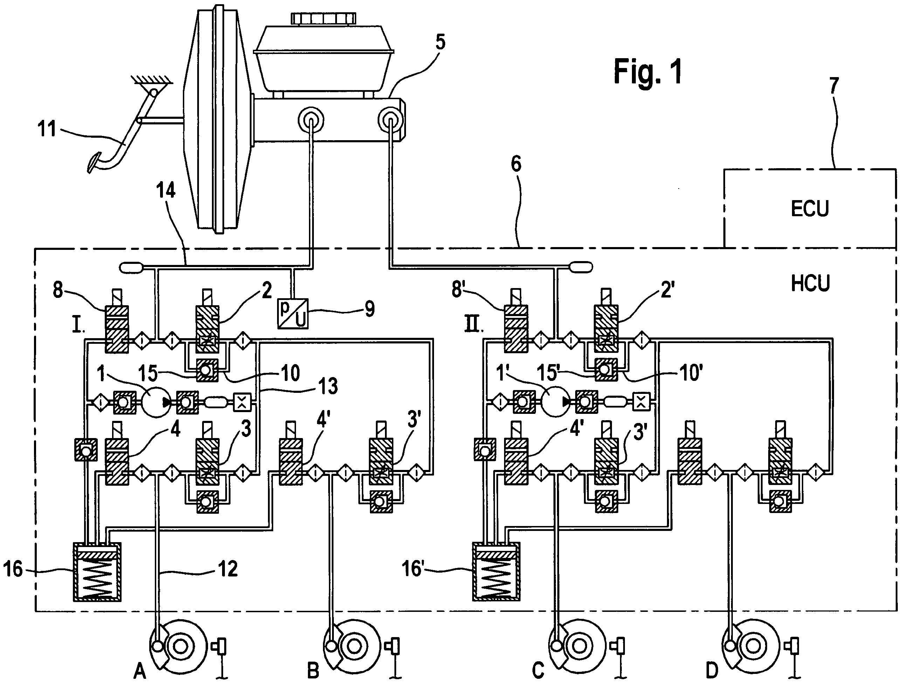

In Fig. 1 ist Tandemhauptzylinder 5 mit Hydraulikeinheit 6 (HCU) eines elektronischen Kraftfahrzeugbremssystems verbunden. Elektronikeinheit 7 (ECU) umfasst ein Mikroprozessor/controllersystem, mit dem die im Ventilblock enthaltenen Aktuatoren und Sensoren elektronisch gesteuert bzw. ausgemessen werden können. Hydraulikeinheit 6 ist in zwei Bremskreise I und II aufgeteilt. Ferner umfasst jeder der Bremskreise je zwei Raddruckkreise (A, B bzw. C, D) mit jeweils einem Einlass- 3 bzw. 3' und einem Auslassventil 4 bzw. 4'. Die Elektronik der ECU 7 umfasst einen mehrkanaligen Stromregler, welcher eine unabhängige Regelung der Ströme durch die Spulen der Trennventile 2, 2' und der Einlassventile 3, 3' erlaubt. Bezugszeichen 8 bzw. 8' bezeichnen stromlos geschlossene elektronische Umschaltventile. In der zu Hauptzylinder 5 führenden Hydraulikleitung 8 befindet sich ein Eingangsdrucksensor 9. Das dargestellte Bremssystem umfasst in den Raddruckkreisen selbst keine weiteren Drucksensoren. Motor-Pumpenaggregat 1 bzw. 1' dient dem aktiven Druckaufbau bei ACC-, TCS- und ESP-Regelungen sowie zur Rückförderung des an den Auslassventilen ausgetretenen Druckmittels, welches sich in Niederdruckspeicher 16 bzw. 16' befindet. Wenn Pumpe 1 angeschaltet ist, fördert diese Druckvolumen in Richtung von Leitung 13, so dass sich der Vordruck erhöht. Auf Grund des Aufbaus der Pumpe pulsiert der Druck am Ausgang der Pumpe in einem vom Aufbau der hydraulischen Komponenten abhängigen Druckbereich.

Bei der Durchführung der Vordruckbemessung wird Pumpe 1 zur Erzeugung von Druckpulsationen zunächst mit einem geeigneten PWM-Strom angesteuert. Am analogisiert betriebenen Einlassventil 3 ergibt sich durch die während der Förderung von Druckmittel mittels der Hydraulikpumpe auftretenden Druckpulsationen ein zumindest qualitativ messbarer Differenzdruck. Eine qantitative Druckbestimmung ist mit dem TPM-Verfahren prinzipiell ebenfalls möglich und daher alternativ bevorzugt. Der PWM-Strom für die Pumpe wird über einen Regler eingestellt, der als Istwert den gemessenen Differenzdruck nutzt oder diesen zumindest in die Regelung miteinbezieht.

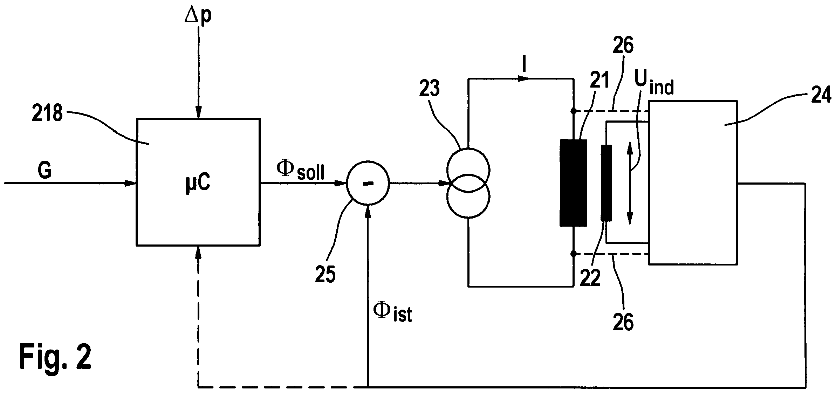

Das Mikrocontrollersystem 218 in Fig. 2 führt alle Regelungsaufgaben der Bremsvorrichtung durch und ist innerhalb von ECU 7 (Fig. 1) angeordnet. Über Stromquelle 23 steuert diese die Spule des elektromagnetisch betriebenen Ventils 21 an. Der Einfachheit halber ist nur eine Ventil-Verstärker Kombination dargestellt. Mit Stromquelle 3 kann der Spulenstrom I individuell für jedes Ventil pulsweitenmoduliert eingestellt und auch gemessen werden. In obiger Bremsvorrichtung sind für jedes Ventil entsprechende Ventiltreiber vorgesehen, die mittels individuell ansteuerbarer PWM-Treiberstufen realisiert sind. Im Bereich des Spulenmagnetfelds ist eine Drahtschleife oder Hilfsspule 22 vorgesehen, deren Anschlussklemmen mit Messeinrichtung 24 verbunden ist. Die Hilfsspule ist insbesondere so angeordnet, dass sie den wirksamen magnetischen Fluss durch Joch und Anker der Spule erfasst. Messeinrichtung 24 enthält eine Schaltung, mit der die an der Messpule bzw. Drahtscheife anliegende Induktionsspannung U_{ind} gemessen werden kann. Prinzipiell kann der Abgriff der induzierten Spannung auch direkt an der Ventilspule erfolgen, wie dies durch gestrichelte Leitungen 26 gezeigt ist. Am Ausgang von Messeinrichtung 4 steht ein Signal Φᵢₛₜ über den magnetischen Fluss zur Verfügung, welches proportional zum Integral über die induzierte Spannung U_{ind}(t) ist.

Bei einer von außen oder durch den Verstärker hervorgerufenen Bewegung des Ventilstößels ergibt sich eine Änderung des magnetischen Flusses Φ in Ventilspule 21, welche durch die Messeinrichtung 24 über Induktionsspannung U_{ind} gemessen werden kann. Messeinrichtung 24 bildet das zeitliche Integral über den Verlauf der induzierten Spannung U_{ind} und führt das integrierte Signal dem Mikrocontroller 218 oder einem zusätzlichen Regler 25 zu. Durch die Rückführung des Signals der Messeinrichtung in den Mikrocontroller lässt sich demzufolge eine Stößelhubregelung oder eine Stößelkraftregelung realisieren.

Gemäß einer bevorzugten Ausführungsform ist vorgesehen, das durch die Abgriffeinrichtung 22, 24 erzeugte Signal über die Zeit aufzuintegrieren, um eine Größe zu ermitteln, die zum magnetischen Fluss oder der magnetischen Kraft proportional ist. Damit kann dann unter Berücksichtigung der Federkraft des Ventils auf die hydraulische Kraft geschlossen werden, aus der sich dann der Differenzdruck am Ventil ermitteln lässt. Unter Berücksichtigung der fertigungsabhängigen Ventileigenschafen lässt sich auf diese Weise der Vordruck zum Zwecke des Einregelns des Überströmdrucks direkt messen.

## Patentansprüche

1. Verfahren zum Bemessen des Vordrucks an einem ersten analogisierten, elektromagnetisch angesteuerten Hydraulikventil (2, 2') zum feinfühligen Regeln des Drucks in einem Druckkreis (13), bei dem der Vordruck am ersten Ventil über die Förderleistung eines Motorpumpenaggregats (1, 1') einstellbar ist, das mit dem ersten Ventil über eine pumpenausgangsseitige Druckleitung (13) verbunden ist, wobei zur Bemessung des Vordrucks ein Sollwert für den Motor des Motorpumpenaggregats vorgegeben wird, insbesondere in einer hydraulischen Kraftfahrzeugbremsanlage, **dadurch gekennzeichnet, dass** der Vordruck durch elektronische Auswertung der Stößelreaktion des ersten Ventils (2, 2') oder eines weiteren ebenfalls elektromagnetisch angesteuerten und mit der pumpenausgangsseitigen Druckleitung (13) verbunden Hydraulikventils (3,3') eingestellt wird, wobei die Stößelreaktion mittels eines elektrischen Stößelstellungsregelkreises bestimmt wird und wobei bei der Ermittlung des Sollwerts ein elektrisches Signal aus dem Stößelstellungsregelkreis einbezogen wird.

2. Verfahren nach Anspruch 1, **dadurch gekennzeichnet, dass** die hydraulische Bremsanlage mehrere jeweils den Raddruckkreisen zugeordnete Ein- (3, 3') und Auslassventile (4, 4') umfasst und dass das erste oder das weitere Ventil ein analog ansteuerbares Trennventil (2, 2') zum Abtrennen der Bremsbetätigungseinheit (5) von den Einlassventilen der Radbremskreise ist.

3. Verfahren nach Anspruch 2, **dadurch gekennzeichnet, dass** das erste oder das weitere Ventil mit einer elektrischen Abgriffeinrichtung (22, 24) versehen ist, welches eine elektronische Bestimmung der Stößelstellung erlaubt.

4. Verfahren nach mindestens einem der Ansprüche 1 bis 3, **dadurch gekennzeichnet, dass** die Stößelstellung oder die hydraulische Kraft mittels eines elektrischen Stößelstellungsregelkreises bestimmt wird.

5. Verfahren nach Anspruch 3 oder 4, **dadurch gekennzeichnet, dass** durch die Abgriffeinrichtung die Induktionsspannung oder der Induktionsstrom bei einer Stößelbewegung bestimmt wird, entweder durch Abgriff an der Ventilspule selbst oder mit Hilfe einer zusätzlichen
Drahtschleife oder -spule im Bereich des Magnetkreises des Magnetventils.

6. Verfahren nach mindestens einem der Ansprüche 1 bis 5, **dadurch gekennzeichnet, dass** das erste oder weitere Ventil durch eine geeignete Stromeinstellung in oder in die Nähe eines Kräftegleichgewichts eingestellt wird, so dass dieses für Druckänderungen empfindlich ist.

7. Verfahren nach mindestens einem der Ansprüche 1 bis 6, **dadurch gekennzeichnet, dass** das erste oder weitere Ventil zur Bestimmung des am Ventil anliegenden Differenzdruck herangezogen wird.

8. Verfahren nach mindestens einem der Ansprüche 3 bis 7, **dadurch gekennzeichnet, dass** das durch die Abgriffeinrichtung (22, 24) erzeugte Signal über die Zeit aufintegriert wird, um eine Größe zu ermitteln, die zum magnetischen Fluss oder der magnetischen Kraft proportional ist, und damit unter Berücksichtigung der Federkraft des Ventils auf die hydraulische Kraft geschlossen wird, aus der sich dann der Differenzdruck am Ventil ermitteln lässt.

9. Elektronisch gesteuerte Kraftfahrzeugbremsdruckregelvorrichtung mit zumindest einem ABS-Regler, insbesondere auch einem ESP-Regler, umfassend ein Druckerzeugungsmittel (5) mit dem vom Fahrerwunsch abhängig Druckmittel über Druckleitungen in ein Hydraulikaggregat (6) eingesteuert werden kann, mit Trennventilen (2, 2') zum Abtrennen der Raddruckkreise (A....D) vom Druckerzeugungsmittel (5) sowie Einlassventilen (3, 3'), welche mit den Trennventilen und den Raddruckkreisen hydraulisch verbunden sind, umfassend weiterhin Mittel für einen aktiven Druckaufbau (8, 8', 1, 1'), **dadurch gekennzeichnet, dass** die elektronische Steuerung der Vorrichtung so eingerichtet ist, dass diese bei Bedarf ein Verfahren gemäß mindestens einem der Ansprüche 1 bis 8 durchführen kann.

## Claims

1. Method for dimensioning the admission pressure at a first, analogized, electromagnetically actuated hydraulic valve (2, 2') for sensitively regulating the pressure in a pressure circuit (13) in which the admission pressure at the first valve can be set by means of the delivery capacity of an engine pump assembly (1, 1') which is connected to the first valve via a pump-outlet-side pressure line (13), wherein in order to dimension the admission pressure a setpoint value is predefined for the motor of the motor pump assembly, in particular in a hydraulic motor vehicle brake system, **characterized in that** the admission pressure is set by electronically evaluating the tappet reaction of the first valve (2, 2') or of a further hydraulic valve (3, 3') which is also actuated electromagnetically and is connected to the pump-outlet-side pressure line (13), wherein the tappet reaction is determined by means of an electrical tappet position control circuit, and wherein an electrical signal from the tappet position control circuit is included in the acquisition of the setpoint value.

2. Method as claimed in Claim 1, **characterized in that** the hydraulic brake system comprises a plurality of inlet valves (3, 3') and outlet valves (4, 4') which are respectively assigned to the wheel pressure circuits, and **in that** the first valve or the further valve is an analog-actuable isolating valve (2, 2') for disconnecting the brake activation unit (5) from the inlet valves of the wheel brake circuits.

3. Method as claimed in Claim 2, **characterized in that** the first valve or the further valve is provided with an electrical tap device (22, 24) which permits the position of the tappet to be determined electronically.

4. Method as claimed in at least one of Claims 1 to 3, **characterized in that** the position of the tappet or the hydraulic force is determined by means of an electrical tappet position control circuit.

5. Method as claimed in Claim 3 or 4, **characterized in that** the induction voltage or the induction current when a tappet movement occurs is determined by means of the tap device, either by tapping at the valve coil itself or by using an additional wire loop or wire coil in the region of the magnetic circuit of the solenoid valve.

6. Method as claimed in at least one of Claims 1 to 5, **characterized in that** the first valve, or the further valve, is set by means of a suitable current setting in, or in the vicinity of, an equilibrium of forces, with the result that said valve is sensitive to pressure changes.

7. Method as claimed in at least one of Claims 1 to 6, **characterized in that** the first valve, or the further valve, is used to determine the differential pressure present at the valve.

8. Method as claimed in at least one of Claims 3 to 7, **characterized in that** the signal which is generated by means of the tap device (22, 24) is integrated over time in order to acquire a variable which is proportional to the magnetic flux or to the magnetic force, and the hydraulic force from which the differential pressure at the valve can then be acquired is inferred by taking into account the spring force of the valve.

9. Electronically controlled motor vehicle brake pressure control device having at least one ABS controller, in particular also an ESP controller, comprising a pressure generating means (5) with which pressure medium can be fed into a hydraulic assembly (6) via pressure lines as a function of the driver's request, having isolating valves (2, 2') for disconnecting the wheel pressure circuits (A ... D) from the pressure generating means (5), and inlet valves (3, 3') which are hydraulically connected to the isolating valves and the wheel pressure circuits, also comprising means (8, 8', 1, 1') for actively building up pressure, **characterized in that** the electronic control of the device is configured in such a way that when necessary said device can carry out a method according to at least one of Claims 1 to 8.

## Revendications

1. Procédé pour mesurer la pression d'alimentation au niveau d'une première valve hydraulique analogique à commande électromagnétique (2, 2') pour le réglage fin de la pression dans un circuit de pression (13), dans lequel la pression d'alimentation de la première valve est réglable par l'intermédiaire de la puissance du débit d'un groupe moto-pompe (1, 1'), relié à la première valve par l'intermédiaire d'une conduite de pression (13) du côté sortie de la pompe, une valeur de consigne pour le moteur du groupe moto-pompe étant définie pour la mesure de la pression d'alimentation, notamment dans une installation de freinage hydraulique d'un véhicule automobile, **caractérisé en ce que** la pression d'alimentation est réglée par le traitement électronique de la réaction des poussoirs de la première valve (2, 2') ou d'une autre valve hydraulique (3, 3') également à commande électromagnétique et reliée à la conduite de pression (13) du côté sortie de la pompe, la réaction des poussoirs étant déterminée au moyen d'un circuit d'asservissement électrique de la position des poussoirs et un signal électrique du circuit d'asservissement électrique de la position des poussoirs participant à la détermination de la valeur de consigne.

2. Procédé selon la revendication 1, **caractérisé en ce que** l'installation de freinage hydraulique comporte plusieurs valves d'entrée (3, 3') et de sortie (4, 4') affectées respectivement aux circuits de pression des roues et **en ce que** la première valve ou l'autre valve est une valve de séparation (2, 2') à commande analogique pour séparer l'unité d'actionnement des freins (5) des valves d'entrée des circuits de freins des roues.

3. Procédé selon la revendication 2, **caractérisé en ce que** la première valve ou l'autre valve est pourvue d'un dispositif de détection électrique (22, 24) permettant une détermination électronique de la position des poussoirs.

4. Procédé selon une au moins des revendications 1 à 3, **caractérisé en ce que** la position des poussoirs ou la force hydraulique est déterminée au moyen d'un circuit d'asservissement électrique de la position des poussoirs.

5. Procédé selon la revendication 3 ou 4, **caractérisé en ce que** la tension d'induction ou le courant d'induction est déterminé par le dispositif de détection électrique lors d'un déplacement de poussoir, soit par mesure directe sur le bobinage de la valve ou à l'aide d'une boucle ou d'un bobinage de fils supplémentaire dans le périmètre du circuit magnétique de la valve magnétique.

6. Procédé selon une au moins des revendications 1 à 5, **caractérisé en ce que** la première valve ou l'autre valve est réglée par un réglage approprié du courant pour un équilibre des forces ou à son voisinage, de manière à le rendre sensible aux variations de pression.

7. Procédé selon une au moins des revendications 1 à 6, **caractérisé en ce que** la première valve ou l'autre valve est mise à contribution pour la détermination de la pression différentielle appliquée à la valve.

8. Procédé selon une au moins des revendications 3 à 7, **caractérisé en ce que** le signal généré par le dispositif de détection (22, 24) est intégré dans le temps pour déterminer une grandeur proportionnelle au flux magnétique ou à la force magnétique permettant ainsi en tenant compte de la force de ressort de la valve de tirer une conclusion sur la force hydraulique à partir de laquelle on peut alors déterminer la pression différentielle sur la valve.

9. Dispositif de régulation à commande électronique de la pression des freins d'un véhicule automobile avec au moins un régulateur ABS, notamment également un régulateur ESP, comprenant un moyen de production de pression (5) permettant d'acheminer des moyens de pression par l'intermédiaire de conduites de pression dans un groupe hydraulique (6) en fonction du désir du conducteur, avec des valves de séparation (2, 2') pour séparer le circuit de pression des roues (A ... D) du moyen de production de pression (5) ainsi que des valves d'entrée (3, 3') qui sont reliées hydrauliquement aux valves de séparation et aux circuits de pression des roues, comprenant de plus des moyens actifs de restauration de la pression (8, 8', 1, 1'), **caractérisé en ce que** la commande électronique du dispositif est arrangée de telle sorte que celle-ci puisse exécuter si besoin est, un procédé selon au moins une des revendications 1 à 8.
